# EUROPEAN PATENT SPECIFICATION

(11) **EP 1 884 109 B1**
(45) Date of publication and mention of the grant of the patent: **03.04.2013**
(21) Application number: 06751413.3
(22) Date of filing: 24.04.2006
(51) Int. Cl.: H04M 1/725, H04N 7/173

(54) **REMOTE STORAGE OF PICTURES AND OTHER DATA THROUGH A MOBILE TELEPHONE NETWORK**
FERNSPEICHERUNG VON BILDERN UND ANDEREN DATEN DURCH EIN MOBILTELEFONNETZ
STOCKAGE A DISTANCE D'IMAGES ET D'AUTRES DONNEES VIA UN RESEAU TELEPHONIQUE MOBILE

(30) Priority: 27.05.2005 US 139046
(43) Date of publication of application: 06.02.2008
(73) Proprietor: ZORAN CORPORATION, Sunnyvale, CA 94086 (US)
(72) Inventor: GERZBERG, Levy, Los Altos, California 94023 (US)
(74) Representative: Hitchcock, Esmond Antony
(86) International application number: PCT/US2006/015697
(87) International publication number: WO 2006/130273

(56) References cited:
- EP-A- 0 999 678
- WO-A-2004/102960
- US-A1- 2002 066 115

## Description

### BACKGROUND

This application relates generally to the remote storage and retrieval of data, and, more specifically, to the utilization of a telephone network to communicate the data between a remote site and the location of the data storage facility.

WO 2004/102960 discloses a system and device in accordance with the precharacterizing portion of the independent claims. US 2002/0066115 discloses a digital portable communications device having circuitry for exchanging video signals between the device and an external video apparatus.

One type of data that are communicated over a mobile (cellular) telephone network is visual data acquired by a mobile picture telephone. Such data are of both still images and motion image sequences. These data are typically either sent to another telephone, in order to share them with friends and family, and/or are stored in the mobile telephone for later viewing or downloading into a data memory of a personal computer or the like. The visual data are typically downloaded by taking the mobile telephone to the location of the computer to which the data are transferred.

It is desirable to improve the convenience of utilizing this and other types of data.

### SUMMARY OF THE INVENTION

According to one aspect of the invention there is provided an appliance. The appliance has, within a surrounding enclosure; a controller, including a processor, operative to control receipt and utilization of signals from outside of the appliance through an established signal path; data storage memory coupled with the controller for storing the signals; and a mobile telephone module coupled to the data storage memory. The mobile telephone module is responsive to a dialled telephone number unique to the mobile telephone module to establish a connection from a remote telephone to the appliance over a mobile telephone network. Furthermore, the controller is operative to provide to the remote telephone access to the data storage memory, through the mobile telephone module and the mobile telephone network, for storing data of pictures in the data storage memory from the remote telephone, and for reading data of pictures from the data storage memory and sending the read data to the remote telephone, without any further user intervention in the operation of the appliance.

According to a second aspect of the invention there is provided a method of providing remote access to data storage memory in an appliance. The method comprises, at the appliance, in response to the unique telephone number of the appliance being dialed by a remote telephone, establishing a connection between the appliance and the remote telephone through a mobile telephone network. The method further comprises storing in the data storage memory of the appliance first data of pictures received over the established connection from the remote telephone and, in response to a designated command received over the established connection from the remote telephone through the mobile telephone network, sending requested data of pictures from the data storage memory of the appliance to the remote telephone through the mobile telephone network.

Briefly and generally, the storage and retrieval of data at a central location is implemented through a mobile telephone network. A mobile telephone capability is integrated into an existing non-portable appliance so that it may be accessed from a remote telephone by dialing its unique telephone number. Communication is thereby easily established directly between the remote telephone and the appliance, for the purpose of transmitting data between the two. Examples of such an appliance to which the mobile telephone module is added include audio-video equipment, a personal computer and other pieces of electronic equipment. The addition of mobile telephone communication capability adds a second function to the appliance. Since the mobile telephone network over which the appliance communicates is a serverless communication network, the possibility of access of the data by persons unrelated to the original transmission event is reduced.

In a first specific embodiment, a mobile telephone module is built into consumer appliances, such as television set-top cable or satellite boxes, DVD player-recorders, television sets and other audio-video appliances that contain or are connected to a disk drive or other mass data storage media. The mobile telephone module includes a group of electronic components and connecting circuitry, often incorporating software control and processing by the use of one or more signal or data processing elements. It provides full receive and transmit mobile phone connectivity, but without including a user interface. In other words, this module need not provide a keypad or a display screen. The function of this module is to allow a remote mobile telephone to call the appliance by dialing its unique mobile telephone number, and then receive at least visual data acquired by the remote mobile telephone that has been sent over a mobile telephone network to the mobile telephone module. This visual data, which may be a motion image sequence or one or more still images, is then stored in a mass data storage media associated with the appliance. Alternately, or in addition, the transmitted visual data may be displayed in real time on a television set or video monitor that is part of the appliance or to which the appliance is connected. The stored visual data in the appliance may also be viewed in this manner at a later time, or even resent through the mobile telephone module to another telephone number for utilization at a different location.

These techniques are particularly advantageous for a user of a mobile telephone that takes pictures. The pictures that are taken can be sent by the user to an appliance in his or her home. The mobile telephone function is added to an appliance that has another primary function, such as recording television programs. The two functions are complementary. The pictures received by the appliance may be displayed in a manner similar to the other visual data recorded by the appliance, or may even be edited or aggregated in the appliance. Since the transmission is peer-to-peer, directly between two mobile telephone devices having unique telephone access numbers, it is very easy to effect, and use, this private transmission.

Individuals using picture mobile telephones can then easily send their pictures home while they are traveling, for example. The pictures may be sorted before sending them home, thus eliminating the tedium of sorting and selecting from a large number of pictures after the vacation is over, when the memories are not as fresh in the traveler's mind. For business, important events may be easily documented in this manner, and confidential information can be more securely transmitted than is the case when use is made of the Internet. Transmitted pictures can even serve as a travel report.

In a second specific embodiment, a mobile telephone module is built into a non-mobile computer appliance such as a personal computer. A data storage memory of the computer is then accessed by a remote telephone through that module to store data sent from the telephone or to read and send data to the telephone. Such a computer is then a personal server to its owner, its data being accessible through the mobile telephone network by a peer-to-peer connection established when the unique telephone number of the computer's mobile telephone module is dialed. These data may also be of pictures taken by a mobile telephone but are not limited to this.

Additional aspects, advantages and features of the present invention are included in the following description of exemplary examples thereof, which description should be taken in conjunction with the accompanying drawings.

### BRIEF DESCRIPTION OF THE DRAWINGS

Figure 1 shows a first embodiment wherein an audio-video appliance is used to store visual data and accompanying audio data from a mobile picture telephone;

Figure 2 is an electronic block diagram of the appliance of Figure 1;

Figure 3 is a flow chart that illustrates an operation of the appliance of Figures 2 and 4;

Figure 4 shows a second embodiment wherein a personal computer is remotely accessed over a mobile telephone network to store and retrieve data; and

Figure 5 illustrates commercial arrangements that may be used with an equipment manufacturer and mobile telephone service supplier in connection with an appliance having mobile telephone capability.

### DESCRIPTION OF EXEMPLARY EMBODIMENTS

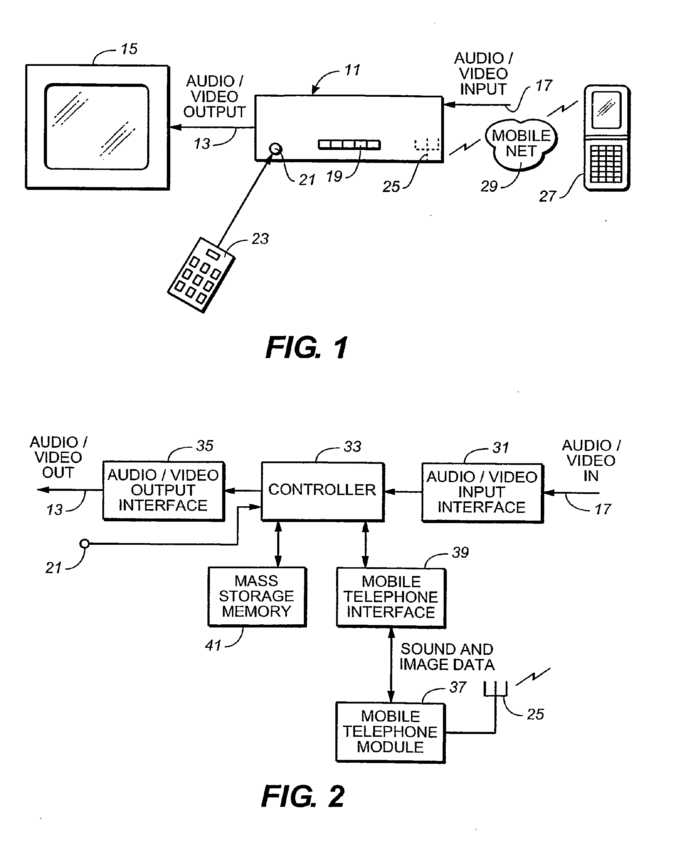

With reference to the first embodiment illustrated in Figure 1, an appliance 11 may be a television set-top box having an audio-video output 13 connected to a television set or video monitor 15 with a sound reproduction system, for the purpose of displaying images and reproducing audio. An audio-video input 17 may be from a neighborhood television cable service, satellite dish, regular television antenna, DVD player, video tape player or the like. Multiple such inputs may be provided from which a selection is made by the appliance 11 to send to the output 13. Operator controls 19, such as a row of push-buttons, allow the user to make this selection and control other operations of the appliance. A mass data storage device, such as a hard magnetic disk or optical disk writer, is often also included in the appliance for the storage of audio-video data. A television tuner or other audio-visual processing may be included. All of these items are built into a single housing or package. The appliance 11 is usually located in a fixed position on or near the monitor 15, an immobile device. An infra-red signal detector 21 is also typically provided on the outside of the housing to receive operating commands from a hand-held remote control 23.

What has been described so far is a range of typical set-top boxes that currently exist. What is being added to these, according to the present invention, is a mobile telephone module with an antenna 25 that connects to a mobile telephone network in the same manner as existing portable mobile telephones. But instead of providing audio and image communication directly with a user, as does a mobile picture telephone, audio and video signal interfaces of the internal mobile telephone module are connected for utilization within the appliance. Images and sound received from a remote mobile picture telephone 27 over a mobile telephone network 29 may be directed within the appliance to the video monitor 15, stored within the appliance's mass storage for later retrieval, or put to some other use. The audio interface to the mobile telephone module may also be connected to a jack on the front of the appliance for connection of a headset, or to a speaker/microphone on the appliance, so that the user may communicate with the sender of pictures in real time. Other interfaces of a telephone, such as a dialing pad and image screen, are preferably not made part of the appliance 11.

As with a mobile telephone, the mobile telephone module within the appliance 11 answers when its unique telephone number is received over the mobile network 29. Image and/or audio data may be sent to the appliance 11 from a remote portable mobile picture telephone, for instance, by the remote telephone dialing the number of the module within the appliance 11 and then transmitting the image and/or voice data over the resulting connection that is established between the two. The user of the appliance 11 may be given options to control its use of the received data, such as sending them to the monitor 15 for viewing and listening as the data are being received. The received data will also usually always be stored in the mass storage memory of the appliance 11, if the appliance contains such a memory. Data storage is preferably made the default action that takes place, absent any contrary command by the user made through the interface 19 or the remote control 23.

An example electronic system within the appliance 11 is illustrated by the block diagram of Figure 2. Circuits 31 interface the input 17 to a controller 33. The controller 33 preferable includes a microprocessor. Circuits 35 interface the output 13 to the controller 33. A mobile telephone module 37 communicates through the antenna 25 with a mobile telephone network in the same way as portable mobile telephones. But the received sound and image data are interfaced through circuits 39 to the controller 33 instead of being connected to a display and earphone or loudspeaker of a typical mobile picture telephone. A mass storage memory 41, such as a magnetic or optical disk drive, is also connected to the controller 33, as is the infra-red signal detector 21. The controller 33 controls the flow of data between and among the various functional blocks connected to it, and may also do some processing of the data, as desired.

In addition to receiving data through the mobile telephone module 37, the system may also be configured to send data from the memory 41 through the mobile telephone network to a similar appliance located elsewhere, or to a remote telephone, either mobile or wired. This can be accomplished by calling into the appliance 11 from a remote telephone or entering the proper command through the remote control 23, plus the destination telephone number. Among various uses for this capability, the user of the appliance 11 can share his or her pictures in the memory 41 with friends and family a distance away.

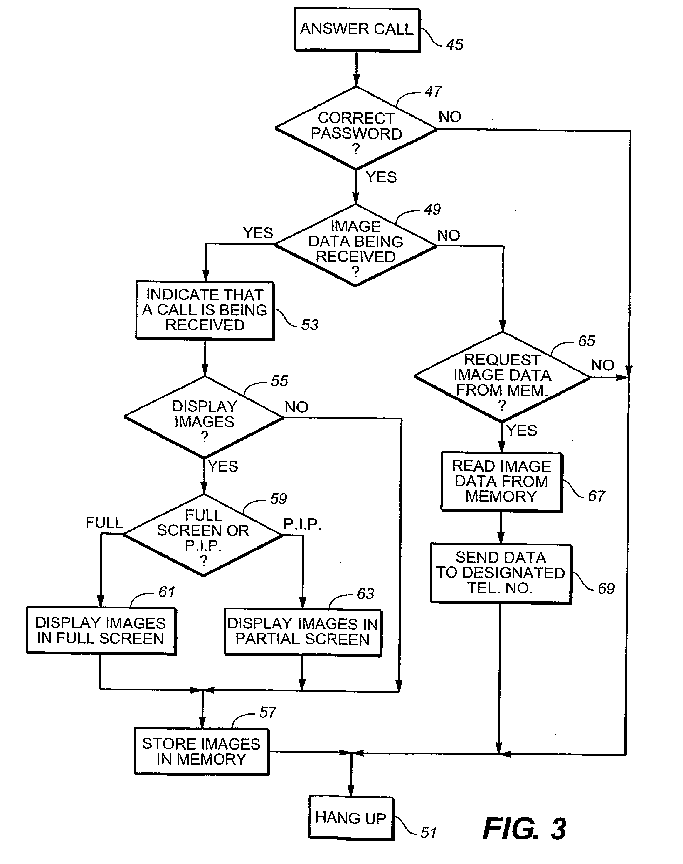

An example of the operation of the appliance 11 to receive image and accompanying audio data from a mobile mobile picture telephone is illustrated in Figure 3. The mobile telephone module 37 of the appliance 11 is activated in response to the unique telephone number of the appliance 11 being dialed by the mobile telephone 27. In a step 45, that call is answered. The call can be answered manually by the user through the remote 23 or one of the controls 19 in response to a ringing sound emitted by the module 37. But since, in this example, the purpose of the mobile telephone 27 in placing the call is to download data from the picture telephone into the appliance 11, the call is preferably automatically answered by the module 37. The appliance 11 will commonly be unattended. A user that is present may be given a chance to prevent the appliance 11 from answering the call but the default condition is preferably that the call is automatically answered. One use of the appliance 11 is to allow its owner to send it image and accompanying sound data from the remote telephone 27 when the owner is traveling or otherwise away from his or her home in which the appliance 11 is located.

Once the call is answered, the appliance 11 may be configured to require that a user password be entered through the remote telephone 27 before any further communication is allowed, in a step 47. Although the connection through the mobile telephone network 29 is relatively secure since a peer-to-peer connection is established, the appliance 11 may be called by anyone having its telephone number. The password is therefore normally desired to protect against unauthorized access of the appliance 11. In the step 47, a password received from the remote telephone 27 is compared with one stored in the mobile telephone module 37. If the comparison is positive, the operation proceeds to a next step 49. But if the correct password is not received in a specified number of tries, the operation proceeds to a step 51, where the appliance 11 automatically hangs up. Alternative to password protecting the appliance 51, or in addition to it, other communication security techniques that have been developed for communication over the Internet may be employed. Encrypting the data to a personal key of the user is one such technique.

In the step 49, it is determined whether data are being received by the appliance 11 or whether the purpose of the call is to retrieve data from the memory 41 of appliance 11. This determination may be made in response to a specific command that is required to be sent from the remote telephone 27, or can be made from the type of signal the remote telephone is sending. If it is determined that image and/or audio data is being sent to the appliance 11, that data are preferably always stored in the memory 41. But it is also desirable to allow a user, if present at the appliance 11 at the time the call is received, to view the incoming image data on the television set or monitor 15 and listen to any accompanying audio through the sound system of the set or monitor. For that purpose, an indication is given, in a step 53, of the incoming call. This indication can be in an audible form and/or can be sent to the television set or monitor 15 for display. If the user is watching television or a video recording at the time, a notice is visually superimposed onto the program being watched.

In response to such notice, the user can, in a step 55, cause the appliance 11 to either display the images and reproduce any sound as their data are being received, or not, by operating the remote control 23 or the appliance controls 19. If the user does not want to be interrupted at the moment, entry of a command to prevent display of the images causes the data to be recorded in the memory 41, as indicated by a step 57. After all the data are recorded and the remote telephone 27 is hung up, the appliance 11 automatically hangs up, in the step 51.

But if the user indicates in the step 55 that viewing of the incoming image data is desired, the form of the display may be selected through the remote control 23 or appliance controls 19. One possible choice is to view the images in full screen or as a small picture within the picture (P.I.P.) of the program or video being watched at the time, as indicted by steps 59, 61 and 63. The appliance 11 may operate to display the images as the data of them are received, along with the data being written into the memory 41, or to display the image shortly after storage in the memory 41. By storing the image data first, the duration, rate of individual image display and other aspects of the display may be controlled independently of how the remote telephone 27 is transmitting the image data.

If, in the step 49, it is determined that the purpose of the received call is not to transmit data to the appliance 11, a next step 65 determines whether the call is requesting that data be retrieved from the memory 41 and sent over the mobile telephone network 29. If so, the requested data are read from the appliance memory 41, in a step 67. That data are then sent to a telephone number identified by the remote telephone 27, in a step 69. This allows the user to remotely access data of images and any accompanying sound for display on the requesting remote picture telephone 27, or to cause them to be sent over the mobile telephone network to another like appliance or picture telephone of a business colleague, friend or family member for storage or immediate viewing.

It will be recognized that the mobile telephone module 37 is integrated into the appliance 11, within the housing of the unit. This is more than simply connecting an external mobile telephone to an existing appliance since the mobile module is adapted to provide a communications capability of the appliance to executing specific functions. It is unnecessary for the purposes described herein to include a keypad on the appliance for initiating mobile telephone calls. The module 37 receives data called into the appliance 11 and allows the appliance to make a call to send data but this call is not initiated by the user at the location of the appliance. Rather, the appliance makes a call to send data through the mobile telephone module 37 as a result of another call having been made into the appliance.

Another feature that may be included in the appliance is a two-way telephone communications capability so that the person at the appliance and the person with the mobile telephone 27 may talk with each other before, during or after the data have been transmitted. The appliance may include a plug (not shown) for connecting a handset or headset, or a microphone/speaker built into its front panel (not shown) to enable such communication.

Once the data are stored in the memory 41 of the appliance, the images may be viewed through the television set or monitor 15 after the telephone call is completed and the appliance hangs up. The capability may be provided in the appliance 11 to present individual pictures as a slide show, as is done in computer photography display software. Other presentation formats may also be provided for selection by the user through the remote control 23 or the controls 19.

The remote control 23 is most conveniently one that comes with the television set or monitor 15. The appliance 11 is then provided with the capability to learn certain infra-red signal codes that the remote control's user decides to employ as commands to control operation of the appliance 11 in the manner described herein. Alternatively, a generic remote control with a learning capability may be purchased and trained to work with both the television set or monitor 15 and the appliance 11. And, of course, a separate remote control can be made to work with only the appliance 11.

The appliance 11 has been described above as a device designed primarily to interface the television set or video monitor 15 with a television cable, satellite dish, or the like, but to which the mobile telephone module 37 has been added. Such a mobile telephone module can also be added within the packages of other audio-video equipment having data storage capability, such as a DVD player, a combined DVD player and recorder and a video tape player (VCR). Further, these appliances are sometimes integrated with television sets or video monitors, in which case the mobile telephone capability is also so integrated. Finally, the mobile telephone capability may be built into a television set or video monitor without the functions of a set-top box, DVD player/recorder, VCR, or the like, provided that a sufficient memory for the storage of image and accompanying sound data is added.

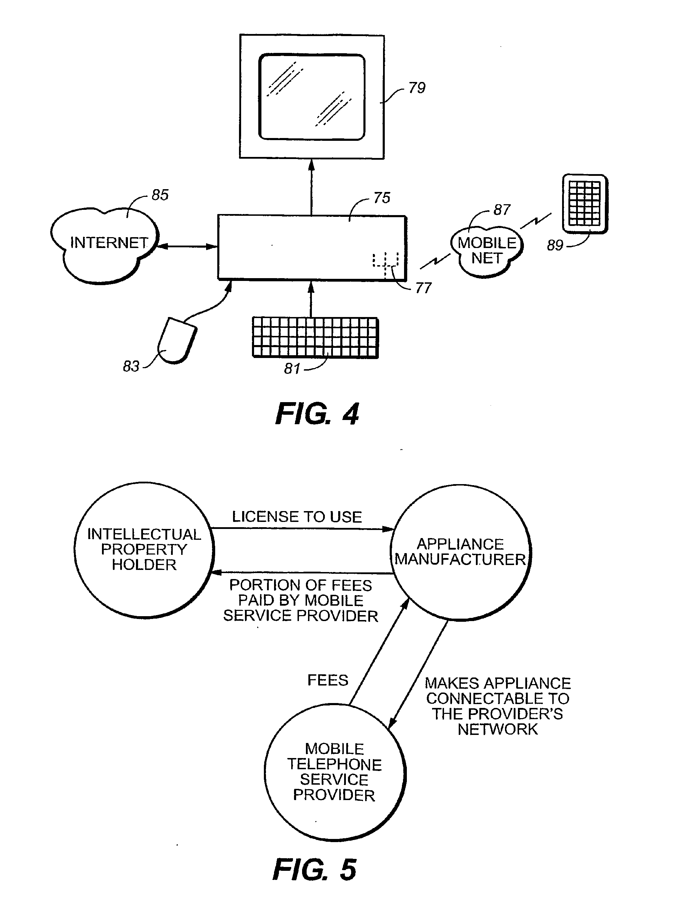

A second embodiment of the present invention is illustrated in Figure 4, wherein a personal computer processing unit 75 appliance has a mobile telephone module including its antenna 77 added within its housing. A desktop or other non-mobile computer also includes a monitor 79, a keyboard 81 and a mouse 83 connected to the processing unit 75. A portable notebook or laptop computer to which the mobile telephone capability can also be added normally includes, of course, all these functions in a single unit. Most computers are also connected to the Internet, either wirelessly or by a wire connection. What is added as part of the main processing unit 75 is the ability to be reached through the mobile telephone network 87 by a mobile telephone 89, or a wired telephone, dialing the unique telephone number of the computer system.

Such a computer system can be used to store data on and retrieve image data from its disk drive or other mass storage non-volatile media, including sending and receiving such data over the Internet, as is commonly done. What the added mobile telephone module provides is the ability to communicate image data and associated audio data by use of a mobile picture telephone in the manner described above. A remote mobile or wired telephone can also retrieve image data from the computer's memory and have the computer send the data either through the mobile telephone network 87 or over the Internet 85. The ability of the computer system to initiate calls will usually not be provided, and particularly a keypad for manually dialing telephone numbers is preferably omitted as it is not necessary.

But the interaction between such a computer system and a telephone is not limited to being used with image and associated audio data. Other types of data may also be sent to and retrieved from the computer over the mobile telephone network by dialing its unique mobile telephone number from a remote telephone, either wired or mobile. The computer system then provides a personal server for its owner that can be accessed with the advantages of a peer-to-peer network. Unlike the Internet, the mobile telephone network is not server based and may include only transitory storage of data. Therefore, the risk of unauthorized access to personal data is significantly reduced, as compared with communication over the Internet.

With reference to Figure 5, a business is illustrated between a mobile telephone service provider (telephone company) and a manufacturer of the appliance (OEM) that includes a mobile telephone module of the type described above. There is value to a mobile service provider when an appliance is configured to operate over its mobile system. Recurring fees will be paid to the mobile service provider by the purchaser of the appliance for use of the provider's mobile telephone network when using the appliance. So in exchange for appliances being configured in this way, OEMs are paid some fee by the mobile service provider. This can be a one-time fee, a recurring periodic fee, or a combination of these. The OEM, in turn, pays a portion of the fee it receives to a licensor of intellectual property used by the manufacturer in the course of integrating a mobile telephone module in its appliances. This intellectual property may include the technology described herein and any resulting patents.

Although various aspects of the present invention have been described with respect to exemplary embodiments thereof, it will be understood that the present invention is entitled to protection within the full scope of the appended claims.

## Claims

1. An appliance (11) having, within a surrounding enclosure:
a controller (33), including a processor, operative to control receipt and utilization of signals from outside of the appliance through an established signal path,
data storage memory (41) coupled with the controller for storing the signals,
and
a mobile telephone module (37) coupled to the data storage memory (41), the mobile telephone module (37) responsive to a dialed a telephone number unique to the mobile telephone module to establish a connection from a remote telephone (27) to the appliance (11) over a mobile telephone network (29),
**characterized in that**:
the controller (33) is operative to provide to the remote telephone access to the data storage memory, through the mobile telephone module (37) and the mobile telephone network (29), for storing data of pictures in the data storage memory from the remote telephone, and for reading data of pictures from the data storage memory and sending the read data to the remote telephone, without any further user intervention in the operation of the appliance.

2. The appliance of claim 1, wherein the controller (33) operates to provide to the remote telephone access to the data storage memory only after an access coda is received from the remote telephone and verified.

3. The appliance of claim 1, wherein the signals controlled by the controller (33) and stored in the data storage memory (41) include audio signals.

4. The appliance of claim 3, wherein the data storage memory (41) includes a hard magnetic disk drive.

5. The appliance of claim 4, wherein the data storage memory (41) includes a recordable optical disk drive.

6. The appliance of claim 1, wherein the signals are visual signals and the appliance is a video playback and recording device, and wherein the data storage memory (41) includes a hard magnetic disk drive.

7. The appliance of claim 1, wherein the appliance is a personal computer.

8. The appliance of claim 1, wherein the appliance is non-portable.

9. The appliance of claim 1,
wherein the data storage memory comprises a writable non-volatile memory,
wherein the mobile telephone module includes mobile telephone circuits responsive to the unique telephone number to receive at least visual signals through a mobile telephone network from the remote telephone and to send at least visual signals through the network, and
wherein the appliance further comprises:
first electronic circuits connectable with a source of visual signals,
second electronic circuits connectable with a visual display,
a sensor for wirelessly receiving signals from a remote control, and
control circuits that operate in response to designated command signals received from a remote control through the sensor or from the remote telephone through the mobile telephone circuit to select from the following functions: (1) send visual signals received by the mobile telephone circuit to the second circuits for display of the received visual signals on the visual display, (2) send visual signals received by the mobile telephone circuit to the data storage memory for storage of the received visual signals therein, (3) send visual signals stored in the data storage memory through the mobile telephone circuit to a specified telephone number, and (4) send visual signals stored in the data storage memory to the second electronic circuits for display on the visual display.

10. The appliance of claim 9. wherein the control circuits additionally require receipt of a unique access code through the network before responding to the remote telephone to perform any the functions (1), (2) or (3).

11. The appliance of claim 9, wherein the control circuits further operate in response to not receiving a designated command signal from the remote control or remote telephone to execute function (2).

12. The appliance of claim 9, wherein the second electronic circuits operate to send visual signals of a plurality of still pictures in time sequence to the visual display.

13. The appliance of claim 12, wherein the control circuits perform the function (1) in real time to send the visual signals of the plurality of still pictures to the second circuits as they are received by the mobile telephone circuits.

14. The appliance of claim 12, wherein the control circuits perform the function (4) to send the visual signals of the plurality of still pictures to the second circuits that were previously received by the mobile telephone circuits.

15. The appliance of claim 9, wherein the appliance is part of a portable notebook computer.

16. The appliance of claim 9, wherein the appliance is part of a hand-held device.

17. A method of providing remote access to data storage memory in an appliance (11), comprising:
at the appliance (11):
in response to the unique telephone number of the appliance (11) being dialed by a remote telephone, establishing a connection between the appliance and the remote telephone (27) through a mobile telephone network (29);
storing in the data storage memory (41) of the appliance (11) first data of pictures received over the established connection from the remote telephone (27);
**characterized in that** the method further comprises:
at an appliance (11):
in response to a designated command received over the established connection from the remote telephone (27) through the mobile telephone network (29), sending requested data of pictures from the data storage memory of the appliance (11) to the remote telephone (27) through the mobile telephone network (29).

18. The method of claim 17, further comprising, in response to a designated command received over the established connection from the remote telephone (27) through the mobile telephone network (29), sending requested data from the data storage memory (41) of the appliance (11) to a remote device at a specified telephone number through the mobile telephone network (29).

19. The method of claim 17, further comprising providing to the remote telephone access to the data storage memory (41) only after an access code is received from the remote telephone and verified.

20. The method of claim 17, including storing in the data storage memory (41) audio signals.

## Patentansprüche

1. Gerät (11), das innerhalb eines umgebenden Gehäuses aufweist:
einen Controller (33), der einen Prozessor einschließt, der betriebsfähig ist, den Empfang und die Nutzung von Signalen von außerhalb des Geräts über einen eingerichteten Signalweg zu steuern,
Datenablagespeicher (41) zum Speichern der Signale, der mit dem Controller gekoppelt ist, und
ein Mobiltelefonmodul (37), das mit dem Datenablagespeicher (41) gekoppelt ist, wobei das Mobiltelefonmodul (37) auf eine für das Mobiltelefonmodul eindeutige gewählte Telefonnummer anspricht, um eine Verbindung von einem entfernten Telefon (27) zum Gerät (11) über ein Mobiltelefonnetzwerk (29) einzurichten,
**dadurch gekennzeichnet, dass**:
der Controller (33) betriebsfähig ist, dem entfernten Telefon über das Mobiltelefonmodul (37) und das Mobiltelefonnetzwerk (29) Zugang zum Datenablagespeicher zu gewähren, und zwar zum Speichern von Daten von Bildern vom entfernten Telefon im Datenablagespeicher und zum Lesen von Daten von Bildern aus dem Datenablagespeicher und Senden der gelesenen Daten an das entfernte Telefon ohne jeglichen weiteren Benutzereingriff in den Betrieb des Geräts.

2. Gerät nach Anspruch 1, worin der Controller (33) arbeitet, um dem entfernten Telefon erst, nachdem ein Zugangscode vom entfernten Telefon empfangen und verifiziert wird, Zugang zum Datenablagespeicher zu gewähren.

3. Gerät nach Anspruch 1, worin die durch den Controller (33) gesteuerten und im Datenablagespeicher (41) gespeicherten Signale Audiosignale einschließen.

4. Gerät nach Anspruch 3, worin der Datenablagespeicher (41) ein Magnetfestplattenlaufwerk einschließt.

5. Gerät nach Anspruch 4, worin der Datenablagespeicher (41) ein aufzeichnungsfähiges optisches Speicherplattenlaufwerk einschließt.

6. Gerät nach Anspruch 1, worin die Signale visuelle Signale sind und das Gerät eine Videoabspiel- und -aufzeichnungsvorrichtung ist und worin der Datenablagespeicher (41) ein Magnetfestplattenlaufwerk einschließt.

7. Gerät nach Anspruch 1, worin das Gerät ein Personalcomputer ist.

8. Gerät nach Anspruch 1, worin das Gerät nicht tragbar ist.

9. Gerät nach Anspruch 1,
worin der Datenablagespeicher einen beschreibbaren nichtflüchtigen Speicher umfasst,
worin das Mobiltelefonmodul Mobiltelefonschaltungen einschließt, die auf die eindeutige Telefonnummer ansprechen, um mindestens visuelle Signale über ein Mobiltelefonnetzwerk vom entfernten Telefon zu empfangen und mindestens visuelle Signale über das Netzwerk zu senden, und
worin das Gerät ferner umfasst:
erste elektronische Schaltungen, die mit einer Quelle von visuellen Signalen verbindbar sind,
zweite elektronische Schaltungen, die mit einer Sichtanzeige verbindbar sind,
einen Sensor zum drahtlosen Empfangen von Signalen von einer Fernbedienung, und
Steuerschaltungen, die als Antwort auf festgelegte Befehlssignale, die über den Sensor von einer Fernbedienung oder über die Mobiltelefonschaltung vom entfernten Telefon empfangen werden, arbeiten, um aus den folgenden Funktionen auszuwählen: (1) Senden durch die Mobiltelefonschaltung empfangener visueller Signale an die zweiten Schaltungen zur Anzeige der empfangenen visuellen Signale auf der Sichtanzeige, (2) Senden durch die Mobiltelefonschaltung empfangener visueller Signale an den Datenablagespeicher zur Speicherung der empfangenen visuellen Signale darin, (3) Senden im Datenablagespeicher gespeicherter visueller Signale über die Mobiltelefonschaltung an eine angegebene Telefonnummer, und (4) Senden im Datenablagespeicher gespeicherter visueller Signale an die zweiten elektronischen Schaltungen zur Anzeige auf der Sichtanzeige.

10. Gerät nach Anspruch 9, worin die Steuerschaltungen zusätzlich den Empfang eines eindeutigen Zugangscodes über das Netzwerk erfordern, bevor dem entfernten Telefon geantwortet wird, um eine der Funktionen (1), (2) oder (3) durchzurühren.

11. Gerät nach Anspruch 9, worin die Steuerschaltungen ferner arbeiten, um als Antwort auf den Nichtempfang eines festgelegten Befehlssignals von der Fernbedienung oder dem entfernten Telefon Funktion (2) auszuführen.

12. Gerät nach Anspruch 9, worin die zweiten elektronischen Schaltungen arbeiten, um visuelle Signale einer Vielzahl von Standbildern in zeitlicher Reihenfolge an die Sichtanzeige zu senden.

13. Gerät nach Anspruch 12, worin die Steuerschaltungen die Funktion (1) in Echtzeit durchführen, um die visuellen Signale der Vielzahl von Standbildern an die zweiten Schaltungen zu senden, wie sie durch die Mobiltelefonschaltungen empfangen werden.

14. Gerät nach Anspruch 12, worin die Steuerschaltungen die Funktion (4) durchführen, um die visuellen Signale der Vielzahl von Standbildern an die zweiten Schaltungen zu senden, die vorher durch die Mobiltelefonschaltungen empfangen wurden.

15. Gerät nach Anspruch 9, worin das Gerät Teil eines tragbaren Notebook-Computers ist.

16. Gerät nach Anspruch 9, worin das Gerät Teil einer Handheld-Vorrichtung ist.

17. Verfahren zum Bereitstellen von Fernzugang zu Datenablagespeicher in einem Gerät (11), umfassend:
im Gerät (11):
als Antwort darauf, dass durch ein entferntes Telefon die eindeutige Telefonnummer des Geräts (11) gewählt wird, Einrichten einer Verbindung zwischen dem Gerät und dem entfernten Telefon (27) über ein Mobiltelefonnetzwerk (29);
Speichern erster Daten von Bildern, die über die eingerichtete Verbindung vom entfernten Telefon (27) empfangen werden, im Datenablagespeicher (41) des Geräts (11);
**dadurch gekennzeichnet, dass** das Verfahren ferner umfasst:
in einem Gerät (11):
als Antwort auf einen festgelegten Befehl, der über die eingerichtete Verbindung vom entfernten Telefon (27) über das Mobiltelefonnetzwerk (29) empfangen wird, Senden angeforderter Daten von Bildern vom Datenablagespeicher des Geräts (11) zum entfernten Telefon (27) über das Mobiltelefonnetzwerk (29).

18. Verfahren nach Anspruch 17, ferner umfassend: als Antwort auf einen festgelegten Befehl, der über die eingerichtete Verbindung vom entfernten Telefon (27) über das Mobiltelefonnetzwerk (29) empfangen wird, Senden angeforderter Daten vom Datenablagespeicher (41) des Geräts (11) an eine entfernte Vorrichtung unter einer festgelegten Telefonnummer über das Mobiltelefonnetzwerk (29).

19. Verfahren nach Anspruch 17, ferner umfassend: Gewähren von Zugang zum Datenablagespeicher (41) für das entfernte Telefon erst, nachdem ein Zugangscode vom entfernten Telefon empfangen und verifiziert wird.

20. Verfahren nach Anspruch 17, einschließend Speichern von Audiosignalen im Datenablagespeicher (41).

## Revendications

1. Appareil (11) présentant, à l'intérieur d'une enveloppe :
un contrôleur (33), incluant un processeur, exploitable de manière à commander la réception et l'utilisation de signaux provenant de l'extérieur de l'appareil, à travers un chemin de signal établi ;
une mémoire de stockage de données (41) couplée au contrôleur en vue de stocker les signaux ; et
un module de téléphone mobile (37) couplé à la mémoire de stockage de données (41), le module de téléphone mobile (37) répondant à un numéro de téléphone unique composé sur le module de téléphone mobile en vue d'établir une connexion d'un téléphone distant (27) à l'appareil (11) sur un réseau de téléphonie mobile (29) ;
**caractérisé en ce que** :
le contrôleur (33) est exploitable de manière à fournir, au téléphone distant, un accès à la mémoire de stockage de données, par l'intermédiaire du module de téléphone mobile (37) et du réseau de téléphonie mobile (29), en vue de stocker des données d'images dans la mémoire de stockage de données à partir du téléphone distant, et de lire des données d'images à partir de la mémoire de stockage de données et d'envoyer les données lues au téléphone distant, sans aucune intervention supplémentaire de l'utilisateur en ce qui concerne le fonctionnement de l'appareil.

2. Appareil selon la revendication 1, dans lequel le contrôleur (33) opère de manière à fournir, au téléphone distant, un accès à la mémoire de stockage de données, uniquement dès lors qu'un code d'accès est reçu à partir du téléphone distant, et dès lors qu'il est vérifié.

3. Appareil selon la revendication 1, dans lequel les signaux commandés par le contrôleur (33) et stockés dans la mémoire de stockage de données (41) comprennent des signaux audio.

4. Appareil selon la revendication 3, dans lequel la mémoire de stockage de données (41) inclut un lecteur de disque dur magnétique.

5. Appareil selon la revendication 4, dans lequel la mémoire de stockage de données (41) inclut un lecteur de disque optique enregistrable.

6. Appareil selon la revendication 1, dans lequel les signaux sont des signaux visuels et l'appareil est un dispositif d'enregistrement et de lecture vidéo, et dans lequel la mémoire de stockage de données (41) inclut un lecteur de disque dur magnétique.

7. Appareil selon la revendication 1, dans lequel l'appareil est un ordinateur personnel.

8. Appareil selon la revendication 1, dans lequel l'appareil n'est pas portable.

9. Appareil selon la revendication 1,
dans lequel la mémoire de stockage de données comprend une mémoire non volatile inscriptible ;
dans lequel le module de téléphone mobile comprend des circuits de téléphone mobile répondant au numéro de téléphone unique en vue de recevoir au moins des signaux visuels, par le biais d'un réseau de téléphonie mobile, en provenance du téléphone distant, et d'envoyer au moins des signaux visuels par l'intermédiaire du réseau ; et
dans lequel l'appareil comprend en outre :
des premiers circuits électroniques pouvant être connectés à une source de signaux visuels ;
des seconds circuits électroniques pouvant être connectés à un affichage visuel ;
un capteur destiné à recevoir par voie hertzienne des signaux en provenance d'une commande à distance ; et
des circuits de commande qui opèrent en réponse à des signaux de commande désignés reçus à partir d'une commande à distance à travers le capteur, ou à partir du téléphone distant par l'intermédiaire du circuit de téléphone mobile, en vue d'opérer un choix parmi les fonctions suivantes consistant à : (1) envoyer des signaux visuels reçus par le circuit de téléphone mobile aux seconds circuits, en vue de l'affichage des signaux visuels reçus sur l'affichage visuel; (2) envoyer des signaux visuels reçus par le circuit de téléphone mobile à la mémoire de stockage de données, en vue du stockage dans celle-ci des signaux visuels reçus ; (3) envoyer des signaux visuels stockés dans la mémoire de stockage de données, par le biais du circuit de téléphone mobile, à un numéro de téléphone spécifié ; et (4) envoyer des signaux visuels stockés dans la mémoire de stockage de données aux seconds circuits électroniques, en vue de leur affichage sur l'affichage visuel.

10. Appareil selon la revendication 9, dans lequel les circuits de commande exigent en outre la réception d'un code d'accès unique à travers le réseau avant de répondre au téléphone distant pour exécuter l'une quelconque des fonctions (1), (2) ou (3).

11. Appareil selon la revendication 9, dans lequel les circuits de commande opèrent en outre en réponse à l'absence de réception d'un signal de commande désigné en provenance de la commande à distance ou du téléphone distant, en vue d'exécuter la fonction (2).

12. Appareil selon la revendication 9, dans lequel les seconds circuits électroniques opèrent de manière à envoyer des signaux visuels d'une pluralité d'images fixes, en séquence temporelle, à l'affichage visuel.

13. Appareil selon la revendication 12, dans lequel les circuits de commande exécutent en temps réel la fonction (1) en vue d'envoyer les signaux visuels de la pluralité d'images fixes aux seconds circuits, tel qu'ils sont reçus par les circuits de téléphone mobile.

14. Appareil selon la revendication 12, dans lequel les circuits de commande exécutent la fonction (4) en vue d'envoyer les signaux visuels de la pluralité d'images fixes, aux seconds circuits, lesquels ont été précédemment reçus par les circuits de téléphone mobile.

15. Appareil selon la revendication 9, dans lequel l'appareil fait partie d'un ordinateur portable.

16. Appareil selon la revendication 9, dans lequel l'appareil fait partie d'un dispositif de poche.

17. Procédé de fourniture d'un accès à distance à une mémoire de stockage de données, dans un appareil (11), comprenant :
au niveau de l'appareil (11) :
en réponse à la composition du numéro de téléphone unique de l'appareil (11) par un téléphone distant, l'établissement d'une connexion entre l'appareil et le téléphone distant (27) à travers un réseau de téléphonie mobile (29) ;
le stockage, dans la mémoire de stockage de données (41) de l'appareil (11), de premières données d'images reçues sur la connexion établie à partir du téléphone distant (27) ;
**caractérisé en ce que** le procédé comprend en outre :
au niveau d'un appareil (11) :
en réponse à une commande désignée reçue sur la connexion établie à partir du téléphone distant (27) à travers le réseau de téléphonie mobile (29), l'envoi de données d'images demandées, de la mémoire de stockage de données de l'appareil (11) au téléphone distant (27), à travers le réseau de téléphonie mobile (29).

18. Procédé selon la revendication 17, comprenant en outre, en réponse à une commande désignée reçue sur la connexion établie à partir du téléphone distant (27) à travers le réseau de téléphonie mobile (29), l'envoi de données demandées, de la mémoire de stockage de données (41) de l'appareil (11) à un dispositif distant, à un numéro de téléphone spécifié à travers le réseau de téléphonie mobile (29).

19. Procédé selon la revendication 17, comprenant en outre la fourniture, au téléphone distant, d'un accès à la mémoire de stockage de données (41), uniquement dès lors qu'un code d'accès est reçu à partir du téléphone distant, et dès lors qu'il est vérifié.

20. Procédé selon la revendication 17, incluant le stockage de signaux audio dans la mémoire de stockage de données (41).
